# DEMANDE DE BREVET EUROPEEN

(11) **EP 0 524 893 A1**
(43) Date de publication de la demande: **27.01.1993**
(21) Numéro de dépôt: 92402153.8
(22) Date de dépôt: 24.07.1992
(51) Int. Cl.: B29C 53/58

(54) **Procédé pour la réalisation de tubes en résine fluorée, notamment en polytétrafluoréthylène**

(30) Priorité: 26.07.1991 FR 9109516
(71) Demandeur: COMPAGNIE PLASTIC OMNIUM Société Anonyme dite:, F-69007 Lyon (FR)
(72) Inventeur: Moret de Rocheprise, Bernard, F-52600 Chalindrey (FR); Tisserand, Serge, F-52260 Chanoy (FR); Dugand, Pascal, F-52000 Chaumont (FR)
(74) Mandataire: Nony, Michel

(57) **Abrégé**

Procédé pour la réalisation de tubes en résine fluorée, notamment en polytétrafluoréthylène (PTFE), dans lequel on enroule sur un mandrin un tube de résine fluorée, notamment de PTFE, cru, on porte le ruban enroulé sur le mandrin à une température supérieure à la température de gélification de la résine fluorée pendant un temps suffisant pour provoquer la gélification, on refroidit le tube et le mandrin et on extrait le mandrin (1). On réalise sur le mandrin un premier enroulement (2) d'environ 30 à 100 couches de ruban avec recouvrement important des spires, puis on réalise sur le premier enroulement (2) un second enroulement (3), ledit second enroulement étant réalisé à spires non jointives et avec alternance des angles d'enroulement entre deux couches successives.

## Description

La présente invention est relative à un procédé pour la fabrication de tubes en résine fluorée, notamment en polytétrafluoréthylène utilisables notamment comme revêtements résistant à la corrosion d'éléments de tuyauterie, en particulier en acier, pour le transport de produits chimiques.

Le procédé selon la présente invention est du type décrit dans le brevet FR-A-2 218 987 de la Société Déposante et comprend les étapes consistant à enrouler sur un mandrin un ruban de résine fluorée, notamment de PTFE cru, obtenu notamment par extrusion lubrifiée et calandrage, l'enroulement du ruban étant effectué selon une pluralité de couches, à porter le ruban ainsi enroulé sur le mandrin à une température supérieure à la température de gélification de la résine fluorée pendant un temps suffisant pour provoquer la gélification, à refroidir le tube et le mandrin et à extraire le mandrin situé à l'intérieur du tube.

Dans le document antérieur, l'enroulement des spires sur le mandrin est réalisé de manière que l'axe du ruban fasse avec l'axe du tube un angle compris entre environ 45° et 90°, les enroulements successifs étant réalisés de préférence avec des spires de sens contraire de manière à alterner les inclinaisons des couches de ruban sur l'axe du tube.

Les tubes ainsi formés tout en donnant satisfaction sur le plan de la résistance mécanique présentent cependant parfois avec certains produits chimiques transportés un inconvénient lié à des phénomènes de diffusion à travers la paroi du tube par suite d'interstices subsistant le long des bords du ruban enroulé aux emplacements de croisement entre les couches enroulées avec des angles d'enroulement différents.

La présente invention se propose de fournir un procédé pour la fabrication de tubes en résine fluorée, notamment en polytétrafluoréthylène, constituant un perfectionnement du procédé décrit précédemment en évitant les inconvénients mentionnés ci-dessus.

Le procédé selon l'invention se caractérise essentiellement par le fait que l'on réalise sur le mandrin un premier enroulement d'environ 30 à 100 couches de ruban avec un angle d'enroulement entre l'axe du ruban et celui du tube voisin de 90° avec recouvrement important des spires puis que l'on réalise sur ledit premier enroulement un second enroulement avec un angle entre l'axe du ruban et celui du tube qui est compris entre environ 45° et environ 90°, ledit second enroulement étant réalisé à spires non jointives et avec alternance des angles d'enroulement entre deux couches successives, ledit second enroulement étant poursuivi jusqu'à obtention de l'épaisseur totale désirée pour le tube.

Le ruban utilisé dans la mise en oeuvre du procédé selon l'invention présente avantageusement une largeur comprise entre environ 20 mm et environ 100 mm, une épaisseur comprise entre environ 50 et environ 100 µm et une densité comprise entre environ 1,5 et environ 1,8.

Dans le but de mieux faire comprendre l'invention, on va maintenant en décrire en se référant au dessin un mode de réalisation nullement limitatif.

Sur le dessin :

La figure 1 illustre schématiquement la mise en oeuvre du premier enroulement du procédé selon l'invention.

La figure 2 illustre la réalisation du second enroulement.

La figure 3 représente schématiquement une coupe axiale partielle à plus grande échelle de la structure obtenue par mise en oeuvre des enroulements conformément aux figures 1 et 2.

La figure 4 illustre schématiquement le procédé mis en oeuvre pour obtenir le ruban utilisé dans le procédé selon l'invention.

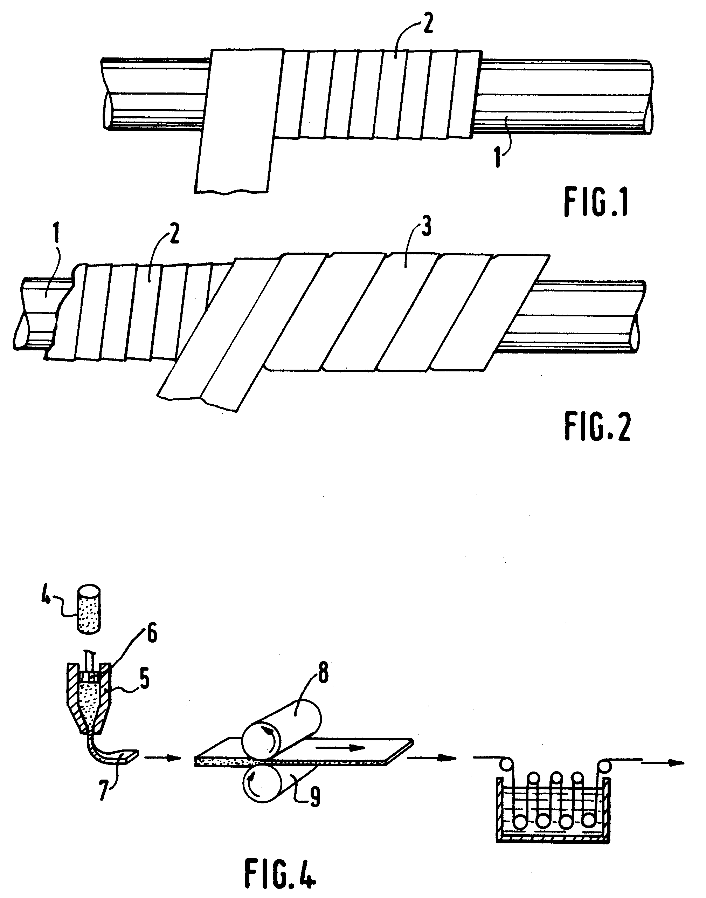

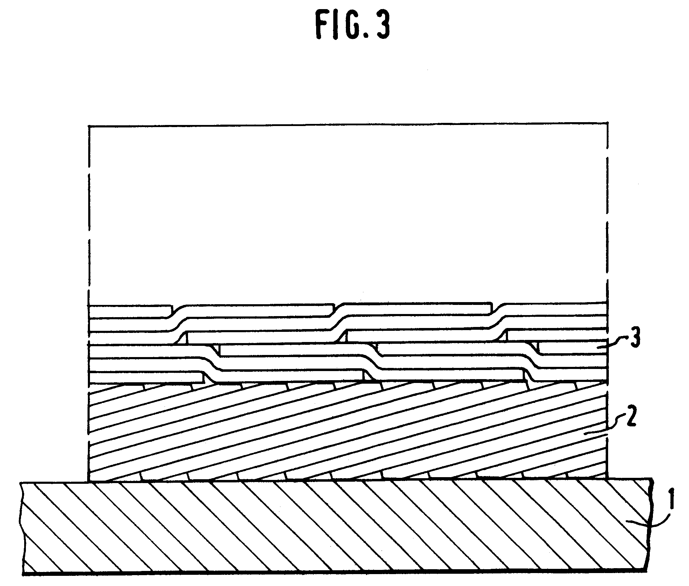

Pour la mise en oeuvre du procédé selon l'invention, on réalise sur un mandrin 1 un premier enroulement 2 d'un ruban de résine fluorée, notamment de PTFE cru, extrudé, calandré, l'enroulement étant effectué à recouvrement important, puis comme illustré sur la figure 2, on réalise sur le premier enroulement un second enroulement 3, l'enroulement 3 étant effectué à recouvrement par couches successives avec des angles d'enroulement différents d'une couche à une autre. L'empilage des couches des enroulements 2 et 3 sur le mandrin 1 est illustré à la figure 3.

La figure 4 illustre schématiquement la fabrication du ruban utilisable selon l'invention.

On réalise tout d'abord une préforme 4 obtenue par compression d'un mélange de poudre fine de résine fluorée, notamment de PTFE et de lubrifiant. Cette préforme 4 est introduite dans une presse à extruder 5 dans laquelle un piston 6 refoule le mélange à travers une filière de manière à obtenir un ruban plat 7.

Ce ruban 7 est ensuite laminé entre deux cylindres 8, 9 pour obtenir un ruban de faible épaisseur.

Le laminage s'effectue pratiquement sans variation de la largeur du ruban qui subit par contre un allongement important.

Le lubrifiant est ensuite éliminé. Cette élimination s'effectue selon la nature du lubrifiant, soit par chauffage, soit par passage du ruban dans un bac contenant du solvant.

On va maintenant décrire un exemple de réalisation de tube selon l'invention.

### Exemple

On utilise une poudre vierge de PTFE obtenue par coagulation d'une dispersion aqueuse puis sèchage. On mélange cette poudre avec un lubrifiant isoparaffinique (ISOPAR) à raison d'environ 20 % en poids de lubrifiant.

On réalise une préforme en comprimant à une pression de 15 kg/cm2 le mélange de poudre et de lubrifiant. Cette préforme qui se présente sous la forme d'un cylindre de 18 cm de long et 6 cm de diamètre est introduite dans une presse à extruder pour former un ruban présentant une épaisseur d'environ 1 mm. Ce ruban a une densité d'environ 1,6.

On procède au calandrage du ruban ainsi préparé de manière à obtenir un ruban présentant une épaisseur de 75µm.

Le ruban est ensuite chauffé pour éliminer le lubrifiant.

Le ruban ainsi obtenu présente une densité de 1,65 et est alors découpé à une largeur de 60 mm.

On réalise le premier enroulement du ruban sur un mandrin ayant un diamètre de 50 mm avec un pas de 2 mm.

On forme ainsi 25 couches réalisant une épaisseur totale de 1,87 mm pour le premier enroulement.

Après avoir procédé à ce premier enroulement, on réalise le second enroulement avec un pas de 12,5 mm.

On réalise ainsi à chaque parcours d'enroulement une superposition de quatre couches de ruban et l'on alterne les enroulements de manière à réaliser un croisement des couches enroulées.

On réalise de cette manière un second enroulement avec une épaisseur totale de 3 mm.

Après avoir procédé aux deux enroulements, on chauffe le mandrin et son revêtement de ruban en PTFE dans un four à 370°C. Cette température est maintenue pendant 1 heure 30, après quoi, on procède à un refroidissement rapide jusqu'à la température ambiante.

Le tube obtenu présente une épaisseur de 3,75 mm et une densité de 2,15.

On extrait enfin le mandrin de l'intérieur du tube formé.

Le tube formé a été mis en place en tant que revêtement intérieur d'un tube métallique et l'ensemble a été soumis au test d'épreuve préconisé par la norme ASTM F 423 "Standard Specification for PTFE Plastic-lined Ferrous Metal Pipes, Fittings and Flanges" publiée en Septembre 1982. Après les cent cycles successifs prévus par tette norme d'injections de vapeur saturée et d'eau froide, aucun défaut du tube de PTFE constituant le revêtement intérieur n'a été constaté. En particulier, l'on n'a noté aucune présence de poche d'eau "blister" dans le tube de PTFE.

Bien que l'invention ait été décrite en liaison avec un mode de réalisation particulier, il est bien évident qu'elle n'y est nullement limitée et qu'on peut lui apporter diverses variantes et modifications sans pour autant sortir ni de son cadre ni de son esprit.

## Revendications

**1 -** Procédé pour la réalisation de tubes en résine fluorée, notamment en polytétrafluoréthylène (PTFE), dans lequel on enroule sur un mandrin un ruban de résine fluorée, notamment de PTFE cru, obtenu de préférence par extrusion lubrifiée et calandrage, l'enroulement du ruban étant effectué selon une pluralité de couches, on porte le ruban ainsi enroulé sur le mandrin à une température supérieure à la température de gélification de la résine fluorée pendant un temps suffisant pour provoquer la gélification, on refroidit le tube et le mandrin et on extrait le mandrin (1) situé à l'intérieur du tube, caractérisé par le fait que l'on réalise sur le mandrin un premier enroulement (2) d'environ 30 à 100 couches de ruban avec un angle d'enroulement entre l'axe du ruban et celui du tube voisin de 90°, avec recouvrement important des spires, puis que l'on réalise sur ledit premier enroulement (2) un second enroulement (3) avec un angle entre l'axe du ruban et celui du tube qui est compris entre environ 45° et environ 90°, ledit second enroulement étant réalisé à spires non jointives et avec alternance des angles d'enroulement entre deux couches successives, ledit second enroulement étant poursuivi jusqu'à obtention de l'épaisseur totale désirée pour le tube.

**2 -** Procédé selon la revendication 1, caractérisé par le fait que l'on utilise un ruban d'une largeur comprise entre environ 20 mm et environ 100 mm et une épaisseur comprise entre environ 50 et environ 100µm.
